# NEUE EUROPÄISCHE PATENTSCHRIFT

(11) **EP 2 202 044 B2**
(45) Veröffentlichungstag und Bekanntmachung des Hinweises auf die Entscheidung über den Einspruch: **07.05.2014**
(45) Hinweis auf die Patenterteilung: 13.07.2011
(21) Anmeldenummer: 08022457.9
(22) Anmeldetag: 24.12.2008
(51) Int. Cl.: B29C 45/44, B29L 31/08, B22D 17/22, F04D 29/22

(54) **Verfahren zum Spritzgießen eines Pumpenlaufrades**
Method for injection moulding of a pump propeller
Procédé destiné au moulage par injection d'une roue de pompe centrifuge

(43) Veröffentlichungstag der Anmeldung: 30.06.2010
(73) Patentinhaber: Grundfos Management A/S, 8850 Bjerringbro (DK)
(72) Erfinder: Vad, Martin, 8900 Randers (DK); Bogh, Morten Holst, 9500 Hobro (DK)
(74) Vertreter: Hemmer, Arnd

(56) Entgegenhaltungen:
- EP-A- 0 734 834
- EP-A1- 0 205 105
- EP-A1- 1 361 008
- EP-A2- 0 392 347
- WO-A-2007/046565
- CN-A- 1 163 356
- CN-A- 1 908 443
- JP-A- 9 250 492
- JP-A- H0 716 884
- JP-A- S5 820 992
- JP-A- 10 202 701
- JP-A- 11 277 583
- US-A- 4 732 541

## Beschreibung

Die Erfindung betrifft ein Verfahren zum Spritzgießen eines Pumpenlaufrades sowie ein entsprechend gefertigtes Pumpenlaufrad.

Pumpenlaufräder, insbesondere Laufräder von Zentrifugal- bzw. Kreiselpumpen weisen üblicherweise eine Mehrzahl von Schaufeln auf, zwischen welchen Kanäle definiert sind, welche sich vom Zentrum des Laufrades zum Außenumfang, üblicherweise entlang einer gekrümmten Bahn erstrecken. Die Schaufeln sind dabei bei geschlossenen Laufrädern zwischen zwei voneinander beabstandeten Deckscheiben ausgebildet, sodass die Strömungskanäle zumindest in einem Abschnitt nur zum Innenumfang und zum Außenumfang des Laufrades geöffnet sind.

Die Fertigung derartiger Laufräder ist recht aufwendig, da die Hohlräume, welche die Strömungskanäle zwischen den Schaufeln definieren, sich nicht ohne weiteres ausbilden lassen. So ist es bekannt, die Laufräder aus mehreren Teilen, sei es aus Kunststoff oder Metall, zusammenzusetzen. So können die Schaufeln an einer Deckscheibe ausgebildet werden und dann beispielsweise die zweite Deckscheibe auf die Stirnkanten der Schaufeln aufgeschweißt werden. Bei einer solchen Ausgestaltung kann die Deckscheibe mit den Schaufeln auch kostengünstig als Gussteil, sei es aus Metall oder Kunststoff, gefertigt werden. Wenn ein geschlossenes Laufrad einteilig als Gussteil gefertigt werden soll, ist dies bislang nur mit Hilfe verlorener Kerne möglich, da sich aufgrund der strömungstechnisch optimierten Geometrie der Strömungskanäle in diesen Hinterschneidungen ergeben, welche ein Herausziehen der Kerne in Längsrichtung der Strömungskanäle verhindern.

Aus Kostengründen ist es jedoch erstrebenswert, derartige Laufräder einstückig zu gießen, beispielsweise als Spritzgussteile aus Kunststoff auszubilden. So können dann weitere Montageschritte, welche zum Zusammensetzen mehrteiliger Laufräder erforderlich sind, entfallen.

WO 2007/046565 A1 sowie EP 0 734 834 A1 offenbart ein Verfahren zur Herstellung eines geschlossenen Laufrades im Spritzguss. Bei diesem werden die Strömungskanäle definierende Kerne radial aus dem Laufrad herausgezogen, wobei die Kerne in axialer Richtung geteilt sind, sodass zunächst ein erster Kernteil radial herausgezogen wird und dann unter axialem Versatz des Laufrades ein zweiter Kernteil radial aus dem Laufrad herausgezogen wird. Hierdurch wird es möglich, auch in axialer Richtung geneigt verlaufende Strömungskanäle auszubilden.

JP 10-202701 offenbart ein Verfahren zum Spritzgießen eines geschlossenen Laufrades, bei welchem die Strömungskanäle durch einstückige Kerne definiert werden. Bei diesem Verfahren ist es somit nicht möglich, komplexe Formen der Strömungskanäle mit Hinterschneidungen in Ziehrichtung der Kerne auszubilden.

Im Hinblick auf diesen Stand der Technik ist es Aufgabe der Erfindung, ein Verfahren zum Spritzgießen eines Pumpenlaufrades bereitzustellen, welches eine einteilige Ausbildung des Pumpenlaufrades als Gussteil ermöglicht, komplexe Formen der Strömungskanäle zulässt und ohne verlorene Kerne auskommen kann. Diese Aufgabe wird durch ein Verfahren mit den im Anspruch 1 angegebenen Merkmalen gelöst. Bevorzugte Ausführungsformen ergeben sich aus den Unteransprüchen, der Beschreibung sowie den Figuren.

Das erfindungsgemäße Verfahren zum Spritzgießen eines Pumpenlaufrades eignet sich sowohl zur Fertigung des Pumpenlaufrades aus Kunststoff, als auch zur Fertigung aus Metall, d. h. im Druckguss. Erfindungsgemäß sind bei dem Verfahren die Kerne, welche die Strömungskanäle im Inneren des Laufrades definieren nicht als verlorene Kerne, sondern als wiederverwendbare Kerne ausgebildet. Der Hauptgedanke der Erfindung liegt darin, die Kerne, welche die Strömungskanäle definieren, geteilt auszubilden, sodass durch die Entnahme erst eines Teils des Kernes eine nötiger Freiraum geschaffen wird, welcher es einem oder mehreren weiteren Kernteilen ermöglicht, sich so zu bewegen, dass sie auch von Hinterschneidungen in dem Strömungskanal außer Eingriff treten können.

So sind die Kerne, welche die Strömungskanäle im Inneren des Laufrades definieren, jeweils aus zumindest zwei Kernteilen gebildet. Zunächst wird das Laufrad in üblicher Weise gegossen, d. h. im Spritzguss aus Kunststoff oder im Druckguss aus Metall. (Nachfolgend wird der Einfachheit halber nur der Begriff Spritzguss verwendet, wobei zu verstehen ist, dass dieser im Sinne der Erfindung auch den Druckguss aus Metall mit umfasst.) Nach dem Spritzgießen wird zunächst nur ein erster Kernteil aus dem Strömungskanal herausgezogen. Dieser Kernteil ist so gewählt bzw. konfiguriert, dass er nicht mit Hinterschneidungen in dem Strömungskanal im Eingriff ist, sondern in einer bestimmten Ziehrichtung frei aus dem Strömungskanal herausgezogen werden kann. Diese Ziehrichtung verläuft im Wesentlichen radial in Richtung des Verlaufes des Strömungskanals, d. h. es handelt sich nicht um eine reine Radialbewegung, sondern um eine Bewegung entlang einer gekrümmten Bahn.

Durch das Herausziehen des ersten Kernteils aus dem Strömungskanal wird in diesem ein Freiraum geschaffen, welcher nachfolgend dazu benutzt wird, den zweiten oder weitere Kernteile so bewegen zu können, dass sie von Hinterschneidungen in dem Strömungskanal außer Eingriff treten können. Derartige Hinterschneidungen können sich durch die Krümmung der Schaufeln im Laufrad ergeben. Diese Krümmung erfolgt zur Optimierung der Strömungsführung beispielsweise so, dass kein konstanter Krümmungsradius gegeben ist, sondern sich der Krümmungsradius im radialen Verlauf der Schaufel ändert. Darüber hinaus ist es auch möglich, dass die Schaufel in zwei Richtungen gekrümmt ist. So kommt es, das sich keine durchgehend gleichmäßige Krümmung ergibt, entlang derer ein Kern aus dem Strömungskanal zwischen den Schaufeln herausgezogen werden könnte. Die Ziehrichtung des zweiten Kernteils ist bevorzugt ebenfalls im Wesentlichen radial nach außen, d. h. zum Außenumfang hin, wobei zu verstehen ist, dass sich die Ziehrichtung im Wesentlichen auch aus dem Verlauf des Strömungskanals ergibt, d. h. idealerweise entlang einer gekrümmten Bahn zum Außenumfang des Laufrades hin erfolgt. Die Relativbewegung quer zu dieser Ziehrichtung erfolgt somit in einem Winkel zu dieser Ziehrichtung, bevorzugt im Wesentlichen normal zu der Ziehrichtung des zweiten Kernteils, sodass dieser vor und/oder während der Ziehbewegung von den Wandungen des Strömungskanals außer Eingriff gebracht werden kann. Der zweite Kernteil oder ein Teil des Laufrades bewegt sich dabei in den Freiraum hinein, welcher durch das vorangehende Entfernen des ersten Kernteils geschaffen wurde.

Wie beschrieben verläuft die Ziehrichtung der zumindest zwei Kernteile bevorzugt im Wesentlichen radial nach außen entlang einer gekrümmten Bahn in Längsrichtung des Strömungskanals. Gemäß einer ersten bevorzugten Ausführungsform liegen die zumindest zwei Kernteile der Kerne, welche die Strömungskanäle im Inneren des Laufrades definieren, jeweils in axialer Richtung bezogen auf die Laufrad-Drehachse übereinander und die Relativbewegung zwischen Laufrad und Kernteilen erfolgt im Wesentlichen in axialer Richtung. D. h. bei dieser Ausgestaltung sind die Kerne durch einen Schnitt geteilt, welcher quer zur Längs- bzw. späteren Drehachse des Laufrades verläuft. Dabei kann dieser Schnitt bzw. die Teilungsebene normal zur Längsachse verlaufen, im Einzelfall aber auch zu dieser geneigt sein. Der genaue Teilungs- bzw. Schnittverlauf ergibt sich im Wesentlichen aus der Geometrie des Strömungskanals und der Art und Lage der dort gebildeten Hinterschneidungen, von welchen die Kerne außer Eingriff gebracht werden müssen. Bei der im Wesentlichen in axialer Richtung übereinanderliegenden Anordnung der Kernteile ergibt sich nach dem Entfernen eines ersten Kernteils im Strömungskanal an einer Axialseite in Längsrichtung der Drehachse des Laufrades ein Freiraum. Um den oder die weiteren Kernteile in diesen Freiraum zu bewegen, ist eine Relativbewegung zwischen Laufrad und Kernteilen im Wesentlichen in axialer Richtung, d. h. in Richtung der Laufrad- bzw. Drehachse erforderlich. Je nachdem, ob die Teilungsebene der Kerne zu dieser Drehachse geneigt ist, kann die Relativbewegung auch eine überlagerte Bewegung in axialer und Umfangsrichtung des Laufrades sein. Die Relativbewegung erfolgt vorzugsweise in einer Richtung normal zu der genannten Teilungsebene.

Gemäß einer weiteren bevorzugten Ausführungsform liegen die zumindest zwei Kernteile der Kerne, welche die Strömungskanäle im Inneren des Laufrades definieren, jeweils in umfänglicher Richtung bezogen auf die Laufrad-Drehachse übereinander, und die Relativbewegung zwischen Laufrad und Kernteil erfolgt im Wesentlichen in umfänglicher Richtung. D. h. bei dieser Ausgestaltung erstreckt sich die Schnitt- bzw. Teilungsebene durch den Kern im Wesentlichen in radialer Richtung, bevorzugt entlang einer gekrümmten Bahn im Wesentlichen in Richtung der Krümmung des Strömungskanals, welcher durch die Kernteile definiert wird. Bei dieser Ausgestaltung wird nach Entfernen eines ersten Kernteils ein Freiraum an einer der Seiten des Strömungskanals in Umfangsrichtung geschaffen. Um einen zweiten oder weiteren Kernteil in diesem Freiraum zu bewegen, ist eine Relativbewegung im Wesentlichen in Umfangsrichtung erforderlich, d. h. das Laufrad wird im Wesentlichen um seine Drehachse relativ zu den Kernen gedreht, bevor oder während die Kerne in ihrer Ziehrichtung, d. h. bevorzugt im Wesentlichen radial entlang der Erstreckungsrichtung der Strömungskanäle aus dem Laufrad herausgezogen werden. Auch bei diesem Ausführungsbeispiel ist zu verstehen, dass die Schnittebene bzw. Teilungsebene in dem Kern nicht genau in radialer Richtung bzw. in Längsrichtung des Strömungskanals, d. h. parallel zur Drehachse des Laufrades verlaufen muss, sondern sich auch geneigt zu dieser Drehachse erstrecken kann. Entsprechend kann die Relativbewegung dann auch eine Bewegung sein, welche sich aus einer Überlagerung einer Bewegung in Umfangsrichtung und axialer Richtung ergibt. D. h. es ist eine Kombination der beiden vorangehend beschriebenen Möglichkeiten der Teilung des Kernes möglich.

Auch ist zu verstehen, dass die Kernteile nicht in derselben Richtung aus dem Strömungskanal herausgezogen werden müssen. So ist es denkbar, dass ein oder mehrere Kernteile radial nach innen aus dem Strömungskanal gezogen werden, während ein oder mehrere andere Kernteile radial nach außen aus dem Strömungskanal herausgezogen werden. Auch so können Hinterschneidungen ausgebildet werden. Ferner ist zu verstehen, dass das beschriebene Verfahren, erforderliche Freiräume zum Bewegen eines zweiten Kernteiles durch vorheriges Entnehmen eines ersten Kernteiles zu schaffen, nicht auf die Verwendung von zwei Kernteilen beschränkt ist. Dieses Verfahren kann entsprechend auch bei mehr Kernteilen Anwendung finden, beispielsweise in der Weise, dass ein dritter Kernteil sich in einen Freiraum bewegt, welcher durch vorherige Entnahme eines zweiten Kernteiles geschaffen wurde.

Die Relativbewegung zwischen Laufrad und Kernteil wird bevorzugt dadurch realisiert, dass das Laufrad in zumindest einer Richtung quer zur Ziehrichtung des Kernteiles frei beweglich ist. So wird die Relativbewegung zwischen Laufrad und Kernteil selbsttätig erzeugt, wenn der Kernteil aus dem Strömungskanal herausgezogen wird. Das Kernteil, welches an einer Wandung des Strömungskanals anliegt, bewegt das Laufrad dann so, dass das Kernteil eine Hinterschneidung an der Wandung des Strömungskanals passieren kann. D. h. durch eine Anlagefläche von Kernteil und Wandung des Strömungskanals schräg zur Bewegungsrichtung bzw. Ziehrichtung des Kernteiles wird eine Kraftkomponente quer zur Ziehrichtung verursacht, welche dann die Relativbewegung des freibeweglichen Laufrades quer zu der Ziehrichtung bewirkt. Die Richtung quer zur Ziehrichtung des Kernes ist wie oben beschrieben, vorzugsweise in Umfangsrichtung oder axialer Richtung bezogen auf die Drehachse des Laufrades, wobei sich auch eine Bewegung in Überlagerung beider Richtungen ergeben kann. Da es allein auf die Relativbewegung zwischen Laufrad und Kernen ankommt, ist es auch denkbar anstatt einer Bewegung des Laufrades eine Bewegung der Kerne bzw. Kernteile in einer Richtung quer zur Ziehrichtung der Kernteile zuzulassen. Auch ist es denkbar, dass sich die Relativbewegung durch eine Überlagerung von Bewegungen sowohl der Kernteile als auch des Laufrades ergibt.

Gemäß einer besonders bevorzugten Ausgestaltung des Verfahrens sind die Kerne, welche die Strömungskanäle im Inneren des Laufrades definieren, jeweils aus zumindest drei Kernteilen gebildet. Die Ausbildung des Strömungskanals durch drei oder mehr Kernteile ermöglicht es, auch komplexe Geometrien des Strömungskanals durch die wiederverwendbaren Kerne auszugestalten. Die Kerne sind so in mehrere Teile geteilt, dass die Entfernung eines Kernteiles jeweils einen Freiraum schafft, welcher anschließend das Entfernen eines weiteren Kernteiles ermöglicht, welcher sonst aufgrund der Geometrie der Wandungen des Strömungskanals nicht aus diesem entfernbar wäre.

Ferner ist es bevorzugt, dass zumindest zwei Kernteile der Kerne, welche die Strömungskanäle im Inneren des Laufrades definieren, jeweils an unterschiedlichen Teilen des äußeren Werkzeuges beweglich angebracht sind. Das äußere Werkzeug ist üblicherweise in zwei Teile geteilt und kann nach dem Spritzgießen durch Auseinanderbewegen der beiden Teile geöffnet werden, sodass das Laufrad, wie es beim Spritzguss oder Druckguss üblich ist, aus dem Werkzeug entnommen werden kann. Die Teilungsebene des äußeren Werkzeuges erstreckt sich dabei bevorzugt im Wesentlichen normal zur Drehachse des Laufrades. Es ist bevorzugt, dass die Kernteile der Kerne so angeordnet sind, dass ein Teil der Kernteile an dem einen Teil des äußeren Werkzeuges und ein anderer Teil der Kernteile an dem anderen Teil des äußeren Werkzeuges angeordnet ist. Wenn beispielsweise die ersten Kernteile an dem ersten Teil des äußeren Werkzeuges angeordnet sind, kann nach dem Entfernen, bzw. Ziehen der ersten Kernteile aus den Strömungskanälen das äußere Werkzeug geöffnet werden, indem der erste Teil und der zweite Teil des äußeren Werkzeuges auseinanderbewegt werden. Dabei werden dann auch die ersten Kernteile mit dem ersten Teil des Werkzeuges von dem zweiten Teil des Werkzeuges und den anderen Kernteilen wegbewegt. Hierdurch wird ein zusätzlicher Freiraum für die Bewegung der zweiten und weiteren Kernteile sowie die Relativbewegung zu dem Laufrad geschaffen.

Gemäß einer weiteren bevorzugten Ausgestaltung des Verfahrens sind zumindest zwei Kernteile eines Kerns beweglich aneinander geführt. Dazu kann in einem Kernteil eine Führungsbahn ausgebildet sein, in welcher ein weiterer Kernteil beweglich geführt ist. Die Führung der Kernteile aneinander vereinfacht den Aufbau des Werkzeuges, da nicht für jeden Kernteil eine separate Führung im äußeren Werkzeug vorgesehen sein muss. Ferner können die Kernteile so auch gemeinsam bewegt werden. Es ist beispielsweise möglich, dass sich ein Kernteil erst um einen gewissen Weg allein bewegt und dann im weiteren Bewegungsverlauf gemeinsam mit einem weiteren Kernteil bewegt. In diesem Fall ist es zweckmäßig, dass diese beiden Kernteile in geeigneter Weise miteinander verbunden bzw. aneinander beweglich geführt sind.

Wie bereits oben beschrieben, ist es in einer speziellen Ausgestaltung des Verfahrens möglich, dass die Kerne, welche die Strömungskanäle im Inneren des Laufrades definieren, jeweils zumindest einen Kernteil aufweisen, welcher radial nach innen aus dem Strömungskanal herausgezogen wird. Weitere Kernteile werden dann bevorzugt radial nach außen aus dem Strömungskanal herausgezogen. So ist es bevorzugt, dass der volumenmäßig größte Teil des Kernes radial nach außen aus dem Strömungskanal bewegt wird, da dort mehr Raum zur Verfügung steht, als im Zentralbereich des Laufrades, wo nur der Raum, welcher später den Saugmund des Laufrades bildet, vorhanden ist. In Abhängigkeit der Geometrie der Strömungskanäle kann es jedoch zweckmäßig sein, einen Kernteil radial nach innen aus den Strömungskanälen zu entnehmen. So ist es denkbar, dass zunächst ein Kernteil radial nach außen bewegt wird, wodurch dann ein Freiraum geschaffen wird, welcher eine Bewegung eines zweiten Kernteils ermöglicht, welcher dann radial nach innen aus dem Laufrad entnommen wird. Anschließend können dann weitere Kernteile radial nach außen entnommen werden. Die sich radial nach innen bewegenden Kernteile können durch einen nach innen zusammenfallenden Kern gebildet werden. Um den Freiraum, welcher das Zusammenfallen des Kernes radial nach innen ermöglicht, zu schaffen, ist es bevorzugt, dass ein weiteres zentrales Kernelement, welches die Eintrittsöffnung bzw. den Saugmund des Laufrades definiert, zuvor in axialer Richtung, d. h. parallel zur Drehachse des Laufrades aus diesem herausgezogen wird.

Das nach dem vorangehend beschriebenen Verfahren gefertigte Pumpenlaufrad weist zwei axial beabstandete Deckscheiben und zwischen den Deckscheiben angeordnete Laufradschaufeln auf, wobei zwischen den Laufradschaufeln Strömungskanäle definiert werden. Erfindungsgemäß sind die beiden Deckscheiben und die Laufradschaufeln dabei einstückig im Spritzguss gefertigt. D. h. das Laufrad ist in einem Teil in einem Gussvorgang gefertigt und wird nicht aus mehren Teilen zusammengesetzt. Dabei kann das Laufrad im Spritzguss aus Kunststoff oder aus Metall, d. h. im Druckguss, ausgebildet sein. Nachfolgend wird die Erfindung beispielhaft anhand der beigefügten Figuren beschrieben. In diesen zeigt:
- Fig. 1: eine perspektivische Ansicht eines erfindungsgemäßen Pumpenlaufrades,
- Fig. 2: eine Schnittansicht eines Pumpenlaufrades gemäß Figur 1,
- Fig. 3: ein Gusswerkzeug zur Ausbildung eines erfindungsgemä- ßen Pumpenlaufrades im geschlossenen Zustand,
- Fig. 4: eine schematische Draufsicht auf die Innenseite eines ers- ten Teils des Werkzeuges gemäß Figur 3,
- Fig. 5: schematisch eine Draufsicht auf die Innenseite eines zwei- ten Teils des Werkzeuges gemäß Figur 3,
- Fig. 6: eine Draufsicht auf den zweiten Teil des Werkzeuges ge- mäß Figur 5 mit im Werkzeug befindlichem Laufrad und im Laufrad befindlichen Kernen,
- Fig. 7: schematisch die Entnahme eines ersten Kernteiles,
- Fig. 8: schematisch die Entnahme eines inneren Kernteiles,
- Fig. 9: schematisch die Entnahme eines zweiten Kernteiles und
- Fig. 10: schematisch die Entnahme eines dritten Kernteiles.

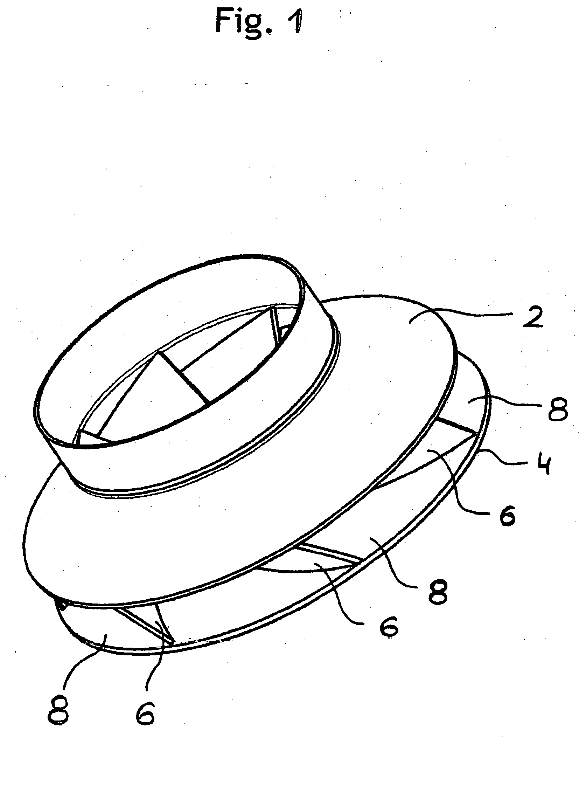

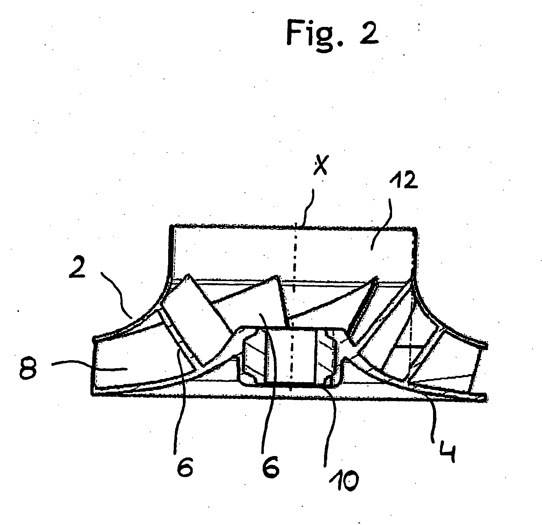

Die Figuren 1 und 2 zeigen ein Beispiel für ein erfindungsgemäßes Laufrad. Das Laufrad 1 weist zwei voneinander beabstandete Deckscheiben 2, 4 auf, zwischen welchen Laufradschaufeln 6 ausgebildet sind. Zwischen den Laufradschaufeln 6 sind Strömungskanäle 8 definiert, welche sich im Wesentlichen vom Zentrum des Laufrades 1 entlang einer gekrümmten Bahn radial nach außen erstrecken und dort zum Umfang hin geöffnet sind. Es handelt sich bei diesem Laufrad 1 um ein typisches Laufrad 1 für eine Zentrifugal- bzw. Kreiselpumpe. In der Deckscheibe 4 ist zentral eine Nabe 10 zur Verbindung mit einer Rotorwelle ausgebildet. Die Deckscheibe 2 ist im Zentrum geöffnet und definiert dort einen Saugmund 12. Wie in der Schnittansicht in Figur 2 zu erkennen ist, sind bei dem erfindungsgemäßen Laufrad die Deckscheiben 2 und 4 sowie die dazwischenliegenden Laufradschaufeln 6 einstückig ausgebildet. Dies erfolgt dadurch, dass das Laufrad mit den Deckscheiben 2 und 4 sowie Leitschaufeln 6 einstückig als Gussbauteil im Spritzguss aus Kunststoff oder aus Metall, d. h. im Druckguss, gefertigt wird. So entfallen nachfolgende Montagevorgänge von Deckscheiben 2 und 4 sowie Laufradschaufeln 6. Darüber hinaus lassen sich auch komplexe Geometrien der Strömungskanäle 8 in Guss ausbilden, sodass die Strömungskanäle 8 strömungstechnisch optimiert geformt werden können. Ein solches einstückig gegossenes Laufrad 1 kann wie nachfolgend beschrieben im Spritzguss aus Metall oder Kunststoff ausgebildet werden.

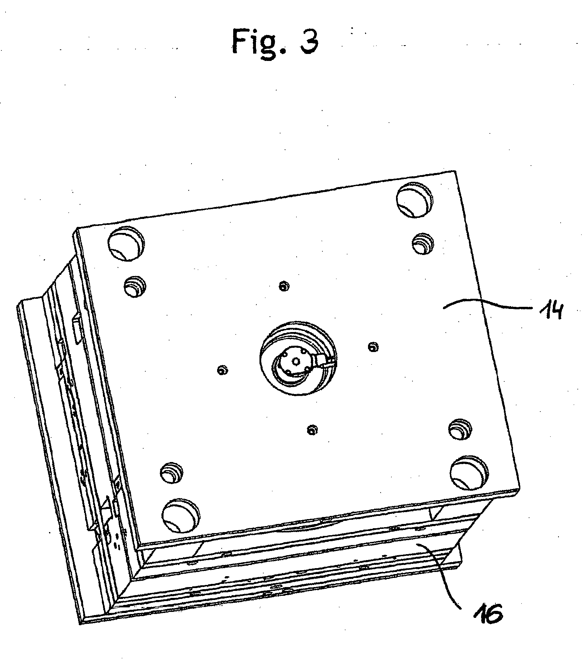

Figur 3 zeigt ein Spritzgusswerkzeug zur Ausbildung eines Laufrades 1 gemäß der vorangehenden Beschreibung im geschlossenen Zustand. Das Spritzgusswerkzeug besteht im Wesentlichen aus zwei äußeren Werkzeug- bzw. Formteilen 14 und 16. Die äußeren Formteile 14 und 16 können auseinander bewegt werden, um das gegossene Laufrad 1 zu entnehmen und definieren im Wesentlichen die äußere Kontur des Laufrades 1.

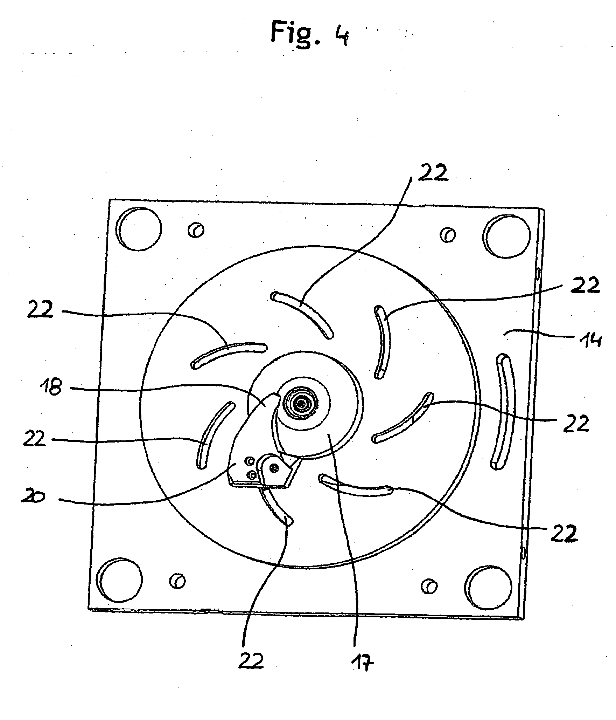

Figur 4 zeigt schematisch eine Draufsicht auf die Innenseite des ersten äußeren Formteils 14. Neben der eigentlichen Form 17, welche die Außenseite der Deckscheibe 4 beim Gießen definiert, sind für die insgesamt sieben Strömungskanäle 8 an dem ersten äußeren Formteil 14 erste Kernteile 18 angebracht, von welchem in Figur 4 nur eines gezeigt ist. Die Kernteile 18 definieren mit weiteren Kernteilen beim Gießen die Strömungskanäle 8. Der erste Kernteil 18 ist an einem ersten Schieber 20 angebracht, welcher in einer Führungsbahn 22 in dem äußeren Formteil 14 beweglich geführt ist. Die Führungsbahnen 22 definieren die Bewegungs- bzw. Ziehrichtungen der ersten Kernteile 18 und verlaufen gekrümmt und leicht schräg in radialer Richtung vom Innenumfang nach außen. Entlang dieser gekrümmten Führungsbahnen 22 können die Schieber 20 mit den ersten Kernteilen 18 in der durch die Führungsbahnen 22 definierten gekrümmten Richtung aus dem gebildeten Strömungskanal 8 zum Außenumfang hin herausgezogen werden. Die Krümmung der Führungsbahnen 12 und deren Richtung verläuft dabei im Wesentlichen in Verlängerung der zu formenden Strömungskanäle 8.

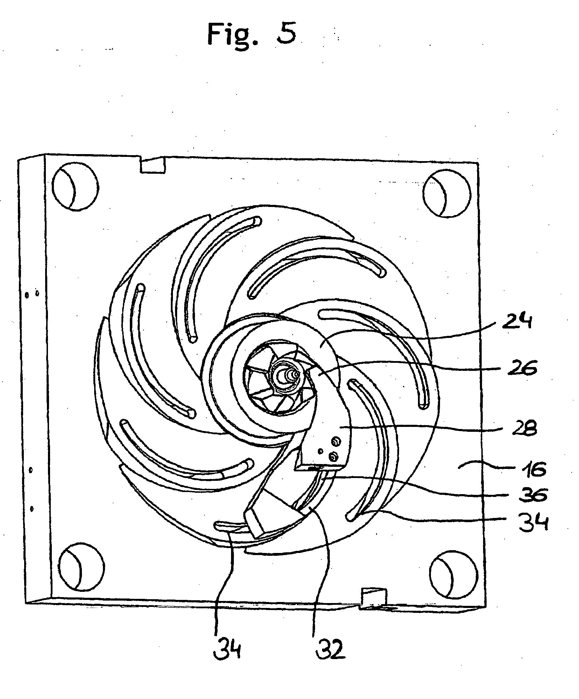

Figur 5 zeigt eine Draufsicht auf die Innenseite des zweiten äußeren Formteils 16. Neben dem Formraum bzw. der Form 24, welche die Außenseite der Deckscheibe 2 beim Gießen definiert, sind an dem zweiten äußeren Formteil 16 weitere Kernteile zur Ausbildung der Strömungskanäle 8 vorgesehen, nämlich ein zweiter Kernteil 26 an einem zweiten Schieber 28 und ein dritter Kernteil 30 an einem dritten Schieber 32. Auch in Figur 5 sind jeweils nur ein zweiter Kernteil und ein dritter Kernteil 30 gezeigt. Die dritten Schieber 32 sind in gekrümmten Führungsbahnen 34 entlang der Führungsbahnen 34 beweglich geführt. Dabei erstrecken sich die Führungsbahnen 34 schräg und gekrümmt zur radialen Richtung von dem zu formenden Laufrad 1 nach außen. Die Führungsbahnen 34 erstrecken sich dabei im Wesentlichen in einer Richtung in Verlängerung der auszubildenden Strömungskanäle. Dabei sind die Führungsbahnen 34 zusätzlich noch zur Querschnittsebene, welche sich normal zur Drehachse X des auszubildenden Laufrades erstreckt, geneigt. Dieser Verlauf der Führungsbahnen 34 ermöglicht es, den dritten Schieber 32 mit dem dritten Kernteil 30 in Verlängerung des Strömungskanals 8 aus diesem am Außenumfang des Laufrades nach außen zu bewegen. An den dritten Schiebern 32 ist jeweils eine Führungsbahn 36 ausgebildet, an bzw. in welcher der zweite Schieber 28 beweglich geführt ist. Die Führungsbahn 36 erstreckt sich dabei ebenfalls gekrümmt und geneigt im Wesentlichen in radialer Richtung in Verlängerung des auszubildenden Strömungskanals 8 nach außen, sodass in Richtung der Führungsbahn 36 der zweite Schieber 28 mit dem zweiten Kernteil 26 zum Außenumfang hin aus dem zu bildenden Strömungskanal 8 herausgezogen werden kann.

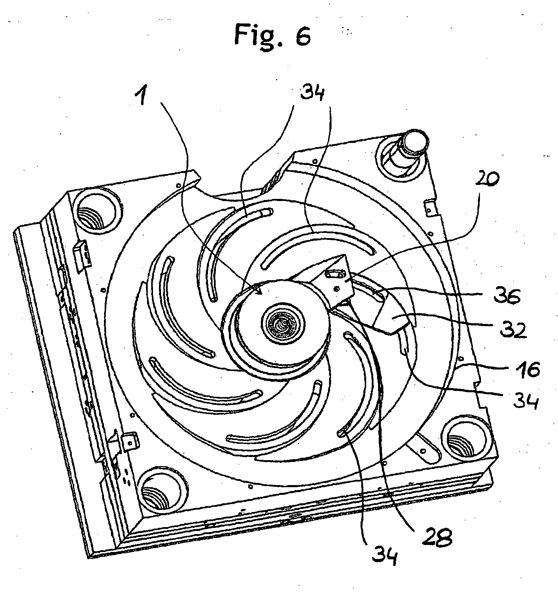

Figur 6 zeigt eine Draufsicht auf die Innenseite des zweiten äußeren Formteils 16 ähnlich der Ansicht in Figur 5, jedoch mit dem darin liegenden geformten Laufrad 1, wobei die drei Kernteile 18, 26 und 30 sich noch im Laufrad 1 befinden. Auch in dieser Ansicht ist jeweils nur eine Kernanordnung bestehend aus den Kernteilen 18, 26 und 30 gezeigt. Es ist zu verstehen, dass an den übrigen sechs Führungsbahnen 34 entsprechende Kernanordnungen platziert sind. Darüber hinaus ist in Figur 6 auch der erste Schieber 20 mit dem ersten Kernteil 18 gezeigt, obwohl dieser eigentlich, wie oben beschrieben an dem ersten äußeren Formteil 14 angebracht ist. D. h. vor dem Öffnen der Formteile 14 und 16 müsste der erste Schieber zunächst aus dem Laufrad herausbewegt werden, um dann gemeinsam mit dem ersten äußeren Formteil 14 wegbewegt werden zu können. Um jedoch den Entformvorgang der Kerne für die Strömungskanäle 8 besser beschreiben zu können, ist in Figur 6 der erste Schieber 20 unabhängig von dem ersten äußeren Formteil 14 gezeigt.

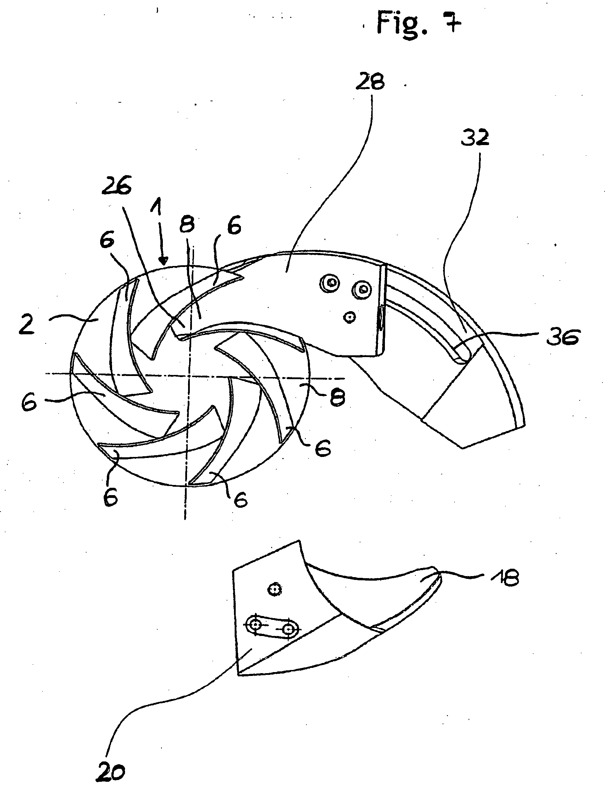

Der genaue Ablauf des Entformungsvorgangs wird nun anhand der Figuren 7 bis 10 beschrieben. Dazu ist in den Figuren 7, 9 und 10 jeweils eine Draufsicht auf das Laufrad 1 gezeigt, wobei die Deckscheibe 4 zur besseren Veranschaulichung der Bewegung der Kernteile weggelassen wurde. Auch die Deckscheibe 2 ist lediglich schematisch dargestellt. Im ersten Schritt wird der erste Kernteil 18 mit dem ersten Schieber 20 in Richtung der Führungsbahn 22 aus dem Strömungskanal 8 in diesem radial nach außen herausbewegt. Anschließend wird das äußere Werkzeug bestehend aus den Formteilen 14 und 16 geöffnet, wobei der Schieber 20 gemeinsam mit dem äußeren Formteil 14 von dem Laufrad wegbewegt wird. Durch das Entfernen des ersten Kernteils 18 wird in dem Strömungskanal 8 ein Freiraum geschaffen, welcher die Bewegung der weiteren Kernteile ermöglicht.

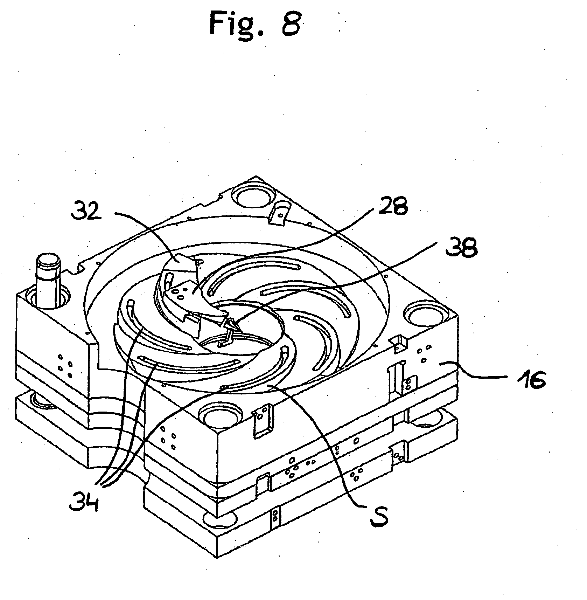

Im zweiten Schritt werden innere Kernteile 38, von welchen in Figur 8 nur eines gezeigt ist, radial nach innen aus den geformten Strömungskanälen 8 herausbewegt. In Figur 8 ist zur besseren Veranschaulichung das gegossene Laufrad und auch ein Teil der Form nicht dargestellt. Die inneren Kernteile 38 sind um Schwenkachsen S verschwenkbar und bilden gemeinsam einen inneren Kern, welcher durch Verschwenken der inneren Kernteile 38 radial nach innen in sich zusammenfallen kann.

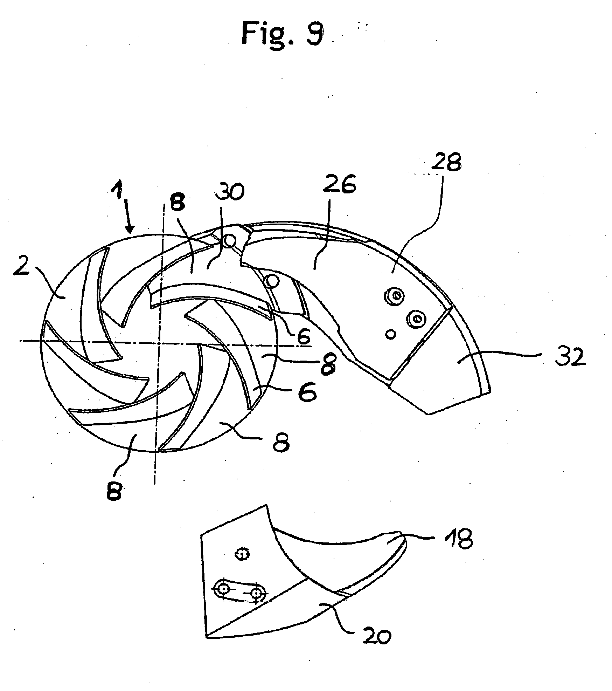

Im nächsten Schritt, welcher in Figur 9 dargestellt ist, wird der zweite Schieber 28 auf dem dritten Schieber 32 entlang dessen Führungsbahn 36 aus dem Strömungskanal 8 herausgezogen. Dadurch wird in dem Strömungskanal 8 ein weiterer Freiraum geschaffen, welcher dann die Entnahme des dritten Kernteils 30 ermöglicht. Der durch die Entnahme des zweiten Kernteils 26 geschaffene Freiraum ermöglicht es, dass sich das Laufrad 1, wenn der dritte Kernteil 30 aus dem Strömungskanal 8 herausgezogen wird, in Richtung der Drehachse X, d. h. in Figuren 7, 9 und 10 normal zur Zeichnungsebene relativ zu dem dritten Kernteil 30 bewegen kann. Auf diese Weise wird ermöglicht, dass das Kernteil 30 von den durch die Kontur der Leitschaufeln 6 bedingten Hinterschneidungen außer Eingriff treten kann und mit dem dritten Schieber 32 entlang der Führungsbahn 34 aus dem Strömungskanal 8 herausgezogen werden kann. Die Relativbewegung zwischen Laufrad 1 und dritten Kernteil 30 in axialer Richtung X, d. h. in einer Richtung quer zur Bewegungs- bzw. Ziehrichtung des dritten Kernteils 30, welche durch den Verlauf der Führungsbahn 34 definiert ist, wird durch die Bewegung des dritten Kernteiles 30 verursacht. D. h. es ist kein separater Antrieb zur Bewegung des Laufrades 1 erforderlich. Das dritte Kernteil 30 drückt beim Herausziehen das Laufrad 1 selbsttätig in die gewünschte axiale Richtung, sodass der dritte Kernteil 30 aus dem Strömungskanal 8 herausgezogen werden kann. Anschließend fällt das Laufrad 1 wieder in seine Ausgangslage zurück. Es ist lediglich erforderlich, in dem äußeren Werkzeug, d. h. dem äußeren Formteil 16 die Bewegungsmöglichkeit des Laufrades 1 in der axialen Richtung X sicherzustellen.

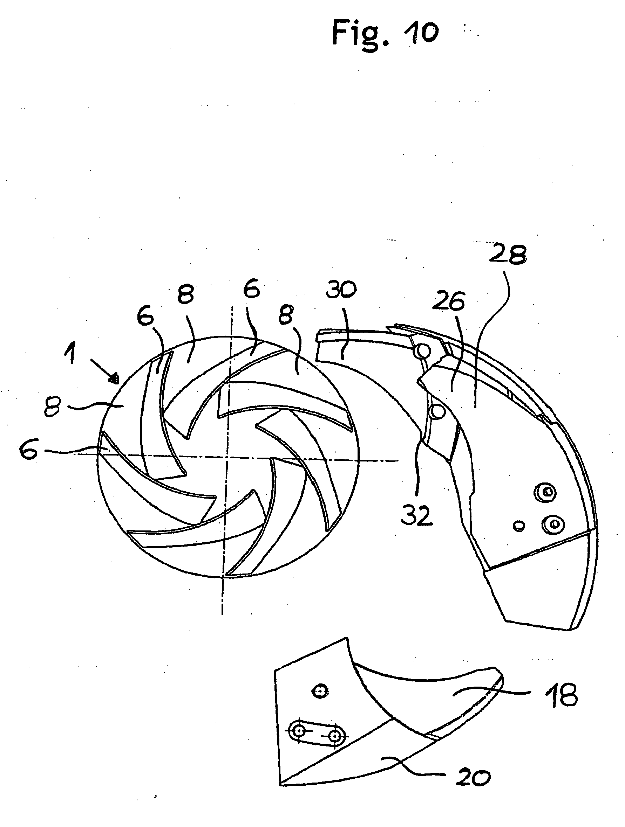

Schließlich sind die Strömungskanäle 8 dann vollständig entformt, wie in Figur 10 dargestellt, und das Laufrad 1 kann per Hand oder durch Roboter in bekannter Weise aus dem äußeren Formteil 16 entnommen werden. Anschließend bewegen sich die Kerne und die äußeren Formteile 14 und 16 wieder in ihre Ausgangslage bzw. geschlossene Lage zurück und der nächste Gussvorgang kann beginnen.

Es ist zu erkennen, dass der erfindungswesentliche Gedanke darin liegt, die Kerne, welche die Strömungskanäle 8 des Laufrades ausbilden, so zu teilen, dass einzelne Kernteile 18, 26, 30 und 38 nacheinander aus den Strömungskanälen 8 entnommen bzw. herausgezogen werden können. Dabei geben die zuerst entfernten Kernteile in dem Strömungskanal 8 einen Raum frei, welcher eine Bewegung der nachfolgend zu entfernenden Kernteile relativ zu dem Laufrad 1 in einer Richtung quer zur eigentlichen Zieh- bzw. Entnahmerichtung der Kernteile ermöglicht. So wird es möglich, dass die Kernteile von Hinterschneidungen, welche sich in der eigentlichen Zieh- bzw. Bewegungsrichtung befinden, außer Eingriff treten können und so ebenfalls aus dem Strömungskanal 8 herausgezogen werden können. Durch die geteilte Ausgestaltung der Kerne wird es somit möglich auch komplexe Geometrien von Strömungskanälen 8 ohne die Verwendung verlorener Kerne, d. h. mit wieder verwertbaren Kernen auszubilden. Die komplexen Geometrien der Strömungskanäle 8 ergeben sich insbesondere dadurch, dass die Leitschaufeln 6 keinen konstanten Krümmungsradius aufweisen, sondern über ihre Erstreckung unterschiedlich stark gekrümmt sind. Darüber hinaus sind die Strömungskanäle 8, wie im vorliegenden Beispiel häufig auch nicht nur in einer Ebene sondern auch noch in einer zweiten Ebene gekrümmt. Eine solche Ausgestaltung bedingt es, dass ein einstückiger Kern nicht aus dem Strömungskanal 8 herausgezogen werden könnte, da so Hinterschneidungen gegeben sind, welche von dem Kern hintergriffen werden.

In gezeigtem Beispiel wird der Strömungskanal 8 durch vier Kernteile definiert. Es ist jedoch zu verstehen, dass auch mehr oder weniger Kernteile in Abhängigkeit von der Geometrie des zu formenden Strömungskanals 8 Verwendung finden können. Auch können die Teilungs- bzw. Schnittebenen, in welchen die Kerne geteilt sind, anders gelegen sein. So können die einzelnen Kernteile, welche im gezeigten Beispiel im Wesentlichen in axialer Richtung X geschichtet sind, beispielsweise ganz oder teilweise auch in Umfangsrichtung bezogen auf die Drehachse X geschichtet sein. In diesem Fall wäre dann ggf. alternativ oder zusätzlich eine Relativbewegung des Laufrades 1 zu den Kernen in Umfangsrichtung erforderlich.

### Bezugszeichenliste

- 1 -: Laufrad
- 2, 4 -: Deckscheiben
- 6 -: Laufradschaufeln
- 8 -: Strömungskanäle
- 10 -: Nabe
- 12 -: Saugmund
- 14, 16 -: äußere Formteile
- 17 -: Form
- 18 -: erster Kernteil
- 20 -: erster Schieber
- 22 -: Führungsbahnen
- 24 -: Form
- 26 -: zweiter Kernteil
- 28 -: zweiter Schieber
- 30 -: dritter Kernteil
- 32 -: dritter Schieber
- 34 -: Führungsbahnen
- 36 -: Führungsbahnen
- 38 -: innere Kernteile
- X -: Drehachse des Laufrades 1
- S -: Schwenkachsen der inneren Kernteile 38

## Patentansprüche

1. Verfahren zum Spritzgießen eines Pumpenlaufrades (1) bei welchem die Kerne, welche die Strömungskanäle (8) im Inneren des Laufrades (1) definieren, jeweils aus zumindest zwei Kernteilen (18; 26; 30) gebildet sind, wobei ein erster Kernteil (18; 26) so konfiguriert ist, dass er nicht mit Hinterschneidungen in dem Strömungskanal (8) in Eingriff ist und frei aus dem Strömungskanal (8) herausgezogen werden kann und der erste Kernteil (18; 26) an einem ersten Schieber (20, 28) angebracht ist, welcher in einer Führungsbahn (22, 36) in einem äußeren Formteil (14, 16) beweglich geführt ist, wobei die Führungsbahn (22) die Bewegungsrichtung des ersten Kernteils (18, 26) definiert und gekrümmt und leicht schräg in radialer Richtung von einem Innenumfang nach außen verläuft, und von den Kernteilen (18; 26, 30) nach dem Spritzgießen zunächst der erste Kernteil (18; 26) entlang einer gekrümmten Bahn (22, 36) in Richtung des Verlaufs des Strömungskanals (8) radial aus dem Strömungskanal (8) herausgezogen wird und anschließend vor oder während des Herausziehens eines zweiten Kernteils (30) eine zusätzliche Relativbewegung zwischen Laufrad (1) und zweitem Kernteil (30) in einer Richtung quer zur Ziehrichtung des zweiten Kernteiles (30) erfolgt.

2. Verfahren nach Anspruch 1, bei welchem die Ziehrichtung der zumindest zwei Kernteile (18; 26, 30) im Wesentlichen radial nach außen entlang einer gekrümmten Bahn (22, 34, 36) in Längsrichtung des Strömungskanals (8) verläuft.

3. Verfahren nach Anspruch 1 oder 2, bei welchem zumindest zwei Kernteile (18; 26, 30) der Kerne, welche die Strömungskanäle (8) im Inneren des Laufrades (1) definieren, jeweils in axialer Richtung (X) bezogen auf die Laufrad-Drehachse (X) übereinander liegen, und die Relativbewegung zwischen Laufrad (1) und Kernteil (30), im Wesentlichen in axialer Richtung (X) erfolgt.

4. Verfahren nach einem der vorangehenden Ansprüche, bei welchem zumindest zwei Kernteile (26, 30) der Kerne, welche die Strömungskanäle (8) im Inneren des Laufrades (1) definieren, jeweils in umfänglicher Richtung bezogen auf die Laufrad-Drehachse (X) übereinander liegen, und die Relativbewegung zwischen Laufrad (1) und Kernteil im Wesentlichen in umfänglicher Richtung erfolgt.

5. Verfahren nach einem der vorangehenden Ansprüche, bei welchem die Relativbewegung zwischen Laufrad (1) und Kernteil (30) dadurch realisiert wird, dass das Laufrad (1) in zumindest einer Richtung quer zur Ziehrichtung des Kernteiles (30) frei beweglich ist.

6. Verfahren nach einem der vorangehenden Ansprüche, bei welchem der die Kerne, welche die Strömungskanäle (8) im Inneren des Laufrades (1) definieren, jeweils zumindest drei Kernteile (18, 26, 30) aufweisen.

7. Verfahren nach einem der vorangehenden Ansprüche, bei welchem zumindest zwei Kernteile (18, 26; 30) der Kerne, welche die Strömungskanäle (8) im Inneren des Laufrades (1) definieren, an unterschiedlichen Teilen (14, 16) des äußeren Werkzeuges beweglich angebracht sind.

8. Verfahren nach Anspruch 6, bei welchem ein erster Kernteil (18) an einem ersten Teil (14) des äußeren Werkzeuges und zumindest ein zweiter Kernteil (26, 30) an einem zweiten Teil (16) des äußeren Werkzeuges angebracht sind und nach dem Herausziehen des ersten Kernteils (18) der erste Teil (14) des Werkzeuges und der zweite Teil (16) des Werkzeuges auseinander bewegt werden.

9. Verfahren nach einem der vorangehenden Ansprüche, bei welchem zumindest zwei Kernteile (26, 30) eines Kernes beweglich aneinander geführt sind.

10. Verfahren nach einem der vorangehenden Ansprüche, bei welchem die Kerne, welche die Strömungskanäle (8) im Inneren des Laufrades (1) definieren, jeweils zumindest einen Kernteil (38) aufweisen, welcher radial nach innen aus dem Strömungskanal (8) herausgezogen wird.

## Claims

1. A method for injection moulding of a pump impeller (1), with which the cores which define the flow channels (8) in the inside of the impeller (1) are formed in each case of at least two core parts (18; 26; 30), wherein a first core part (18; 26) is configured such that it is not in engagement with undercuts in the flow channel (8) and can be pulled freely out of the flow channel (8) and the first core part (18; 26) is attached on a first slide (20; 28) which is movably guided in a guide path (22, 36) in an outer mould part (14, 16), wherein the guide path (22) defines the movement direction of the first core part (18, 26) and runs arcuately and slightly obliquely in the radial direction outwards from an inner periphery, and of the core parts (18; 26, 30) after the injection moulding, firstly the first core part (18; 26) along an arcuate path (22, 36) in the direction of the course of the flow channel (8) is pulled radially out of the flow channel (8) and subsequently an additional relative movement between the impeller (1) and a second core part (30) is effected in a direction transverse to the pulling direction of the second core part (30), before or during the pulling-out of the second core part (30).

2. A method according to claim 1, with which the pulling direction of the at least two core parts (18; 26, 30) runs essentially radially outwards along an arcuate path (22, 34, 36) in the longitudinal direction of the flow channel (8).

3. A method according to claim 1 or 2, with which at least two core parts (18; 26, 30) of the cores, which define the flow channels (8) in the inside of the impeller (1), in each case lie above one another in the axial direction (X) with respect to the impeller rotation axis (X), and the relative movement between the impeller (1) and the core part (30) is effected essentially in the axial direction (X).

4. A method according to one of the preceding claims, with which at least two core parts (26, 30) of the cores, which define the flow channels (8) in the inside of the impeller (1), in each case lie above one another in the peripheral direction with respect to the impeller rotation axis (X), and the relative movement between the impeller (1) and the core part is effected essentially in the peripheral direction.

5. A method according to one of the preceding claims, with which the relative movement between the impeller (1) and the core part (30) is realised by way of the impeller (1) being freely movable in at least one direction transverse to the pulling direction of the core part (30).

6. A method according to one of the preceding claims, with which the cores, which define the flow channels (8) in the inside of the impeller (1), in each case comprise at least three core parts (18, 26,30).

7. A method according to one of the preceding claims, with which at least two core parts (18, 26; 30) of the cores, which define the flow channels (8) in the inside of the impeller (1) are movably attached on different parts (14, 16) of the outer tool.

8. A method according to claim 6, with which a first core part (18) is attached on a first part (14) of the outer tool, and at least one second core part (26, 30) is attached on a second part (16) of the outer tool, and after pulling out the first core part (18), the first part (14) of the tool and the second part (16) of the tool are moved apart.

9. A method according to one of the preceding claims, with which at least two core parts (26, 30) of a core are guided on one another in a movable manner.

10. A method according to one of the preceding claims, with which the cores which define the flow channels (8) in the inside of the impeller (1), in each case comprise at least one core part (38) which is pulled radially inwards out of the flow channel (8).

## Revendications

1. Procédé de moulage par injection d'un rotor de pompe (1), dans lequel les noyaux qui définissent les canaux d'écoulement (8) à l'intérieur du rotor (1) sont formés chacun d'au moins deux parties de noyau (18; 26; 30), une première partie de noyau (18; 26) étant configurée de façon à ne pas venir en prise avec des contre-dépouilles dans le canal d'écoulement (8) et à pouvoir être extraite librement du canal d'écoulement (8), et la première partie de noyau (18, 26) étant disposée sur un premier coulisseau (20; 28) guidé de façon mobile dans une glissière de guidage (22, 36) ménagée dans une pièce moulée extérieure (14, 16), la glissière de guidage (22) définissant la direction de mouvement de la première partie de noyau (18, 26) et s'étendant de manière courbe et légèrement oblique en direction radiale depuis une périphérie intérieure vers l'extérieur, et de parties de noyau (18; 26, 30), après le moulage par injection, tout d'abord la première partie de noyau (18; 26) est extraite radialement du canal d'écoulement (8) le long d'une trajectoire courbe dans la direction de l'étendue du canal d'écoulement (8), puis, avant ou pendant l'extraction d'une deuxième partie de noyau (30), un mouvement relatif supplémentaire s'opère entre le rotor (1) et la deuxième partie de noyau (30) dans une direction transversale à la direction d'extraction de la deuxième partie de noyau (30).

2. Procédé selon la revendication 1, dans lequel la direction d'extraction des au moins deux parties de noyau (18; 26, 30) est orientée sensiblement radialement vers l'extérieur, le long d'une trajectoire courbe (22, 34, 36), dans la direction longitudinale du canal d'écoulement (8).

3. Procédé selon la revendication 1 ou 2, dans lequel au moins deux parties (18; 26, 30) des noyaux qui définissent les canaux d'écoulement (8) à l'intérieur du rotor (1) sont placées l'une au-dessus de l'autre, respectivement dans la direction axiale (X) par rapport à l'axe de rotation (X) du rotor, et le mouvement relatif entre le rotor (1) et la partie de noyau (30) s'opère sensiblement dans la direction axiale (X).

4. Procédé selon l'une des revendications précédentes, dans lequel au moins deux parties (26, 30) des noyaux qui définissent les canaux d'écoulement (8) à l'intérieur du rotor (1) sont placées l'une au-dessus de l'autre, respectivement dans la direction circonférentielle par rapport à l'axe de rotation (X) du rotor, et le mouvement relatif entre le rotor (1) et la partie de noyau s'opère sensiblement dans la direction circonférentielle.

5. Procédé selon l'une des revendications précédentes, dans lequel le mouvement relatif entre le rotor (1) et la partie de noyau (30) est réalisé par le fait que le rotor (1) peut se déplacer librement dans au moins une direction transversale à la direction d'extraction de la partie de noyau (30).

6. Procédé selon l'une des revendications précédentes, dans lequel les noyaux qui définissent les canaux d'écoulement (8) à l'intérieur du rotor (1) présentent chacun au moins trois parties de noyau (18, 26, 30).

7. Procédé selon l'une des revendications précédentes, dans lequel au moins deux parties (18, 26; 30) des noyaux qui définissent les canaux d'écoulement (8) à l'intérieur du rotor (1) sont montées mobiles sur différentes parties (14, 16) de l'outil extérieur.

8. Procédé selon la revendication 6, dans lequel une première partie de noyau (18) est montée sur une première partie (14) de l'outil extérieur et au moins une deuxième partie de noyau (26, 30) est montée sur une deuxième partie (16) de l'outil extérieur et, après l'extraction de la première partie de noyau (18), la première partie (14) de l'outil et la deuxième partie (16) de l'outil sont écartées l'une de l'autre.

9. Procédé selon l'une des revendications précédentes, dans lequel au moins deux parties (26, 30) d'un noyau sont guidées de manière à pouvoir être déplacées l'une contre l'autre.

10. Procédé selon une des revendications précédentes, dans lequel les noyaux qui définissent les canaux d'écoulement (8) à l'intérieur du rotor (1) présentent chacun au moins une partie de noyau (38) qui est extraite du canal d'écoulement (8) radialement vers l'intérieur.
